# EUROPEAN PATENT APPLICATION

(11) **EP 4 559 973 A1**
(43) Date of publication of application: **28.05.2025**
(21) Application number: 23886394.8
(22) Date of filing: 03.11.2023
(51) Int. Cl.: C08L 53/00, C08L 23/10, C08L 23/08, C08F 4/659

(54) **RESIN COMPOSITION AND PREPARATION METHOD THEREOF**

(30) Priority: 04.11.2022 KR 20220145764
(71) Applicant: LG Chem, Ltd., Yeongdeungpo-gu Seoul 07336 (KR)
(72) Inventor: PARK, Ji Hyun, Daejeon 34122 (KR); CHO, Sol, Daejeon 34122 (KR); PARK, Jung Won, Daejeon 34122 (KR); IM, Seul Ki, Daejeon 34122 (KR); KIM, Chang Jong, Daejeon 34122 (KR); LEE, Hyun Mo, Daejeon 34122 (KR); KIM, Yun Kon, Daejeon 34122 (KR); SHIN, Eun Ji, Daejeon 34122 (KR); SA, Seok Pil, Daejeon 34122 (KR)
(74) Representative: Hoffmann Eitle
(86) International application number: PCT/KR2023/017578
(87) International publication number: WO 2024/096700

(57) **Abstract**

The present invention relates to a polyolefin-based resin composition having improved impact resistance at high and low temperatures, and a preparation method thereof.

## Description

### TECHNICAL FIELD

### Cross-reference to Related Application

This application claims the benefit of Korean Patent Application No. 10-2022-0145764, filed on November 4, 2022, in the Korean Intellectual Property Office, the disclosure of which is incorporated herein in its entirety by reference.

### Technical Field

The present invention relates to a resin composition comprising a multi-block copolymer and a method for preparing the same.

### BACKGROUND ART

Polypropylene has excellent rigidity and molding processability, and thus, is widely used as a medical material. However, polypropylene has a problem of having weak impact strength, and in order to compensate for this, methods of using a styrene-based thermoplastic elastomer, that is, styrene-ethylene-butylene-styrene (SEBS) block copolymer, which is an elastomer, in a polypropylene-based resin composition have been proposed.

However, the SEES is expensive, and particularly, has a limitation in improving low-temperature impact strength of the polypropylene-based resin composition. Therefore, the SEBS is not suitable for application as a medical material mainly used in a low-temperature environment.

### [Prior Art Document]

### [Patent Document]

(Patent Document 1) KR 10-1657925 B1

### DISCLOSURE OF THE INVENTION

### TECHNICAL PROBLEM

The purpose of the present invention is to improve room-temperature and low-temperature impact resistance of a polyolefin-based resin composition such as polypropylene.

That is, the purpose of the present invention is to provide a polyolefin-based resin composition having improved both room-temperature and low-temperature impact resistance, and a method for preparing the same.

### TECHNICAL SOLUTION

According to an aspect of the present invention, there are provided a resin composition and a method for preparing the resin composition.
(1) The present invention provides a resin composition comprising a matrix region, and a plurality of domain regions dispersed in the matrix region, wherein the matrix region comprises a polyolefin-based resin, the domain region comprises a block copolymer comprising an aromatic vinyl-based polymer block and an olefin-based polymer block, a size of the domain region is about 10 nm to about 15 nm, and a distance between the plurality of domain regions is about 20 nm to about 60 nm.
(2) In (1) above, the present invention provides a resin composition, wherein the domain region has a shape of a sphere or an ellipsoid.
(3) In (1) or (2) above, the present invention provides a resin composition, wherein the polyolefin-based resin is polypropylene.
(4) In any one of (1) to (3) above, the present invention provides a resin composition, wherein the olefin-based polymer block comprises an ethylene monomer unit and an alpha-olefin-based monomer unit.
(5) In any one of (1) to (4) above, the present invention provides a resin composition, wherein the olefin-based polymer block comprises an ethylene monomer unit and a C3 to C20 alpha-olefin-based monomer unit.
(6) In (4) or (5) above, the present invention provides a resin composition, wherein the alpha-olefin-based monomer is one or more selected from the group consisting of 1-propene, 1-butene, 1-pentene, 3-methyl-1-butene, 1-hexene, 4-methyl-1-pentene, 3-methyl-1-pentene, 1-heptene, 1-octene, 1-decene, 1-undecene, 1-dodecene, 1-tetradecene, 1-hexadecene, 1-eicocene, 4,4-dimethyl-1-pentene, 4,4-diethyl-1-hexene, and 3,4-dimethyl-1-hexene.
(7) In (4) to (6) above, the present invention provides a resin composition, wherein the resin composition comprises the polyolefin-based resin in an amount of about 40 wt% to about 80 wt% and the block copolymer in an amount of about 20 wt% to about 60 wt%.
(8) The present invention provides a method for preparing a resin composition, the method comprising (S10) in the presence of a chain transfer agent, polymerizing one or more olefin-based monomers by using a catalyst composition comprising a transition metal catalyst to prepare an olefin-based polymer block intermediate, (S20) in the presence of the olefin-based polymer block intermediate prepared in the step S10, introducing a polymerization initiator and an aromatic vinyl-based monomer and performing a polymerization to prepare a block copolymer, and (S30) blending the block copolymer prepared in the step S20 and a polyolefin-based resin S30.
(9) In (8) above, the present invention provides a method for preparing a resin composition, wherein the catalyst composition comprises an aluminoxane-based compound and trialkylaluminum.
(10) In (9) above, the present invention provides a method for preparing a resin composition, wherein the trialkylaluminum is trioctylaluminum.
(11) In (9) above, the present invention provides a method for preparing a resin composition, wherein the catalyst composition comprises the aluminoxane-based compound and the trialkylaluminum at a molar ratio of 1:0.01 to 10.0.

### ADVANTAGEOUS EFFECTS

A resin composition of the present invention is excellent in both room-temperature and low-temperature impact resistance.

### BEST MODE FOR CARRYING OUT THE INVENTION

Hereinafter, the present invention will be described in more detail to facilitate understanding of the present invention.

It will be understood that words or terms used in the description and claims of the present invention shall not be construed as being limited to having meanings defined in commonly used dictionaries. It will be further understood that the words or terms should be interpreted as having meanings that are consistent with their meanings in the context of the relevant art and the technical idea of the present invention, based on the principle that an inventor may properly define the meaning of the words or terms to best explain the present invention.

In the present invention, the term 'monomer unit' may represent a component, structure, or material itself derived from a monomer, and may represent, as a specific example, a repeating unit formed in a polymer as a result of the participation of an introduced monomer in a polymerization reaction when polymerizing the polymer.

The term 'polymer' used in the present invention may refer to a homopolymer formed by polymerization from a single type of monomer, and 'copolymer' may refer to a copolymer formed by polymerization from two or more types of monomers. In addition, the 'copolymer' may refer to, unless otherwise stated to be a 'block,' a 'random copolymer' in which two or more types of comonomers are randomly copolymerized.

The term 'block' used in the present invention may refer to a group of repeating units composed of only the same monomer-derived repeating units, or only the same comonomer-derived repeating units since only the same monomer, or only the same comonomer, has participated in a polymerization reaction in a copolymer, and as a specific example thereof, an aromatic vinyl-based polymer block may refer to a block formed only of aromatic vinyl monomer units, and an olefin-based polymer block may refer to a block formed only of one or more olefin-based monomer units.

The term 'anion-active polymer' used in the present invention is a polymer formed by an anionic polymerization reaction, and may refer to a polymer capable of further polymerization or reaction by maintaining an anionic state at one end of the polymer, and as a specific example, may refer to a living anionic polymer.

The term 'composition' used in the present invention comprises not only a reaction product and a decomposition product which are formed from materials of the corresponding composition, but also a mixture of the materials comprising the corresponding composition.

The present invention provides a resin composition.

According to an embodiment of the present invention, the resin composition comprises a matrix region; and a plurality of domain regions dispersed in the matrix region, wherein the matrix region comprises a polyolefin-based resin, the domain region comprises a block copolymer comprising an aromatic vinyl-based polymer block and an olefin-based polymer block, a size of the domain region is about 10 nm to about 15 nm, and a distance between the plurality of domain regions is about 20 nm to about 60 nm.

According to an embodiment of the present invention, the domain region may be a dispersed phase dispersed in a continuous phase, and at this time, the domain region may be a dispersed phase dispersed in the shape of a sphere or ellipsoid in the continuous phase of the matrix region. That is, the domain region may be dispersed in the shape of a sphere or ellipsoid in the matrix region.

According to an embodiment of the present invention, if the domain region is a sphere, 'size' in the size of the domain region may refer to the diameter of the sphere. In addition, if the domain region is an ellipsoid, 'size' in the size of the domain region may refer to the length of the longest axis among three pairs of vertical symmetry axes intersecting at the center of symmetry of the ellipsoid. In addition, the size of the domain region may refer to an individual size of each of a plurality of domain regions, and may also refer to an arithmetic average size of sizes of the plurality of domain region.

According to an embodiment of the present invention, the size of the domain region may be about 10 nm to about 15 nm. As a specific example, the size of the domain region may be about 10.0 nm or greater, about 10.1 nm or greater, about 10.2 nm or greater, about 10.3 nm or greater, about 10.4 nm or greater, about 10.5 nm or greater, about 10.6 nm or greater, about 10.7 nm or greater, about 10.8 nm or greater, about 10.9 nm or greater, about 11.0 nm or greater, about 11.1 nm or greater, about 11.2 nm or greater, about 11.3 nm or greater, about 11.4 nm or greater, about 11.5 nm or greater, about 11.6 nm or greater, or 11.7 nm or greater, and may also be about 15.0 nm or less, about 14.9 nm or less, about 14.8 nm or less, about 14.7 nm or less, about 14.6 nm or less, or about 14.5 nm or less. The size of the domain region is to show a dispersion form such as a degree of dispersion of the domain region dispersed in the polyolefin-based resin in the matrix region, and as described above, if the size of the domain region in the resin composition is controlled, a degree of dispersion of the block copolymer in the domain region dispersed in the polyolefin-based resin in the matrix region may be controlled, thereby improving impact strength of the resin composition.

According to an embodiment of the present invention, a distance between the plurality of domain regions may refer to a distance between individual domain regions present in the matrix region, and may specifically refer to a distance between the closest points among the outermost points of a plurality of domain regions, wherein each domain region has a shape of a sphere or ellipsoid. In addition, the distance between the plurality of domain regions may refer to an individual distance between the plurality of domain regions, and may also refer to an arithmetic average distance of distances between the plurality of domain regions.

According to an embodiment of the present invention, the distance between the plurality of domain regions may be about 20 nm to about 60 nm. As a specific example, the distance between the plurality of domain regions may be about 20.0 nm or greater, about 21.0 nm or greater, about 22.0 nm or greater, about 23.0 nm or greater, about 24.0 nm or greater, about 25.0 nm or greater, about 26.0 nm or greater, about 27.0 nm or greater, about 28.0 nm or greater, about 29.0 nm or greater, about 30.0 nm or greater, about 31.0 nm or greater, about 32.0 nm or greater, about 32.1 nm or greater, about 32.2 nm or greater, about 32.3 nm or greater, about 32.4 nm or greater, about 32.5 nm or greater, about 32.6 nm or greater, about 32.7 nm or greater, or about 32.8 nm or greater, and may also be about 60.0 nm or less, about 55.0 nm or less, about 50.0 nm or less, about 49.0 nm or less, about 48.0 nm or less, about 47.0 nm or less, about 46.0 nm or less, about 45.0 nm or less, about 44.0 nm or less, about 43.0 nm less, about 42.0 nm or less, or 41.3 nm or less. The distance between the plurality of domain regions is to show a dispersion form such as a degree of dispersion of the domain region dispersed in the polyolefin-based resin in the matrix region, and as described above, if the distance between the plurality of domain regions in the resin composition is controlled, a degree of dispersion of the block copolymer in the domain region dispersed in the polyolefin-based resin in the matrix region may be controlled, thereby improving impact strength of the resin composition.

According to an embodiment of the present invention, in the resin composition, it is important that the size of the domain region and the distance between the plurality of domain regions are individually controlled, but it is also important that the size of the domain region and the distance between the plurality of domain regions are simultaneously controlled to be in the above-described ranges. As described above, when the size of the domain region and the distance between the plurality of domain regions are simultaneously controlled to be in the above-described ranges, the impact strength of the resin composition may be further improved. Meanwhile, there may be at least two or more domain regions in the matrix region to an extent that satisfies the size of the domain region, the distance between the plurality of domain regions, and the content ratio of the matrix region and the domain region. In addition, the size of the domain region and the distance between the plurality of domain regions may be controlled from the block copolymer comprising the aromatic vinyl-based polymer block and the olefin-based polymer block in the domain region.

According to an embodiment of the present invention, the size of the domain region and the distance between the plurality of domain regions may be measured by small angle X-ray scattering (SAXS) analysis. Specifically, the small angle X-ray scattering analysis may be used to identify microstructure and morphology of a polymer and/or a copolymer in the domain region in the resin composition. According to the small angle X-ray scattering analysis, through indexing, it is possible to predict in which phase the polymer in the domain region of the resin composition is present, and also, if fitting is performed by assuming a model for a diffraction peak of a small angle X-ray scattering analysis pattern, it is possible to secure information on the structure of the polymer, such as a domain size and a distance between domains in a specific phase. In addition, the size of the domain region and the distance between the plurality of domain regions may be measured by transmission electron microscope (TEM) analysis. At this time, the small angle X-ray scattering analysis and a transmission electron microscope image may be analyzed together to more clearly identify the morphology of the polymer in the domain region.

According to an embodiment of the present invention, the polyolefin-based resin may be polypropylene. The polypropylene may specifically be a polypropylene homopolymer, or a copolymer of propylene and an alpha-olefin monomer, and at this time, copolymer may be an alternating, random, or block copolymer.

According to an embodiment of the present invention, in the polypropylene, the alpha-olefin-based monomer may specifically be a C2 to C12 or C2 to C8 aliphatic olefin. More specifically, an example thereof may be ethylene, 1-butene, 1-pentene, 3-methyl-1-butene, 1-hexene, 4-methyl-1-pentene, 3-methyl-1-pentene, 1-heptene, 1-octene, 1-decene, 1-undecene, 1-dodecene, 1-tetradecene, 1-hexadecene, 1-eicosene, 4,4-dimethyl-1-pentene, 4,4-diethyl-1-hexene, 3,4-dimethyl-1-hexene, or the like, and any one thereof or a mixture of two or more thereof may be used.

According to an embodiment of the present invention, the polypropylene may be any one or a mixture of two or more selected from the group consisting of a polypropylene homopolymer, a propylene-alpha-olefin copolymer, and a propylene-ethylene-alpha-olefin copolymer, and the copolymer a random or block copolymer.

According to an embodiment of the present invention, a melt index (MI) as measured at 230 °C and a load of 2.16 kg in accordance with the ASTM D1238 of the polypropylene may be about 0.5 g/10 min to about 100 g/10 min, about 0.5 g/10 min or greater, or about 1.0 g/10 min or about 2.0 g/10 min or greater, and may also be about 100 g/10 min or less, about 90 g/10 min or less, or about 50 g/10 min or less, and within this range, processability may be further improved during injection molding of the resin composition. In addition, the polypropylene may be a copolymer having the above-described melt index, and may specifically be a propylene-ethylene copolymer, or a high crystalline polypropylene (HCPP), in which case strength properties may be further improved.

According to an embodiment of the present invention, the polypropylene may have a DSC melting point of about 120 °C to about 160 °C.

According to an embodiment of the present invention, the polypropylene may be prepared to satisfy the above-described physical property requirements using a typical polymer preparation reaction, or may be commercially obtained and used. Specific examples thereof may be SEETEC^{™} M1600 manufactured by LG Chem Co., CB5230 manufactured by Korea Oil & Chemical Co., and SFC-750D manufactured by Lotte Chemical Co. In addition, the polypropylene may be a random propylene copolymer, which may be Braskem^{™} PP R7021-50RNA manufactured by Braskem America Inc., or Formolene^{™} 7320A manufactured by Formosa Plastics Corporation.

According to an embodiment of the present invention, the block copolymer comprising the aromatic vinyl-based polymer block and the olefin-based polymer block is a multi-block copolymer, which may be prepared in the presence of a novel additive as described in a method for preparing a resin composition to be described later.

According to an embodiment of the present invention, a weight average molecular weight of the block copolymer may be about 100,000 g/mol to about 300,000 g/mol, and as a specific example, may be about 100,000 g/mol or greater, about 110,000 g/mol or greater, about 120,000 g/mol or greater, or about 125,000 g/mol or greater, and may also be about 300,000 g/mol or less, about 290,000 g/mol or less, about 280,000 g/mol or less, about 270,000 g/mol or less, about 260,000 g/mol or less, about 250,000 g/mol or less, about 240,000 g/mol or less, about 230,000 g/mol or less, about 220,000 g/mol or less, about 210,000 g/mol or less, or about 200,000 g/mol or less.

According to an embodiment of the present invention, a molecular weight distribution (PDI) of the block copolymer may be about 1.5 to about 3.0, and as a specific example, may be about 1.5 or greater, about 1.6 or greater, about 1.7 or greater, about 1.8 or greater, about 1.9 or greater, about 2.0 or greater, about 2.1 or greater, about 2.2 or greater, about 2.3 or greater, or about 2.4 or greater, and may also be about 3.0 or less, about 2.9 or less, about 2.8 or less, about 2.7 or less, about 2.6 or less, or about 2.5 or less. Here, the molecular weight distribution is calculated from the ratio of "weight average molecular weight/number average molecular weight,", and the weight average molecular weight and the number average molecular weight are polystyrene conversion molecular weights analyzed by gel permeation chromatography (GPC).

According to an embodiment of the present invention, the block copolymer may be one in which an olefin-based polymer block comprises a branch chain derived from a main chain.

According to an embodiment of the present invention, the aromatic vinyl-based polymer block may be a block formed by polymerization of an aromatic vinyl-based monomer, and the aromatic vinyl-based monomer for forming the aromatic vinyl-based polymer block may be one or more selected from the group consisting of styrene, α-methylstyrene, 3-methylstyrene, 4-methylstyrene, 4-propylstyrene, 1-vinylnaphthalene, 4-cyclohexylstyrene, 4-(p-methylphenyl)styrene, and 1-vinyl-5-hexylnaphthalene, and as a specific example, may be styrene.

According to an embodiment of the present invention, the content of the aromatic vinyl-based polymer block with respect to the total content of the block copolymer may be about 10 wt% to about 60 wt%, about 15 wt% to about 40 wt%, or about 20 wt% to about 35 wt%, and within this range, there is an effect in that mechanical properties and processability of the block copolymer are excellent.

According to an embodiment of the present invention, the olefin-based polymer block may comprise an ethylene monomer unit and an alpha-olefin-based monomer unit. As a specific example, the olefin-based polymer block (i.e., poly(ethylene-co-olefin)) may comprise an ethylene monomer unit and a C3 to C20 alpha-olefin-based monomer unit, and as a specific example, may comprise an ethylene monomer unit and a C6 to C8 alpha-olefin-based monomer unit. As described above, if the olefin-based polymer block comprises an ethylene monomer unit and a C3 to C20 or C6 to C8 alpha-olefin-based monomer unit, weather resistance, heat resistance, abrasion resistance, impact resistance, adhesion, transparency, and recyclability are excellent, and there is an effect in that mechanical properties of the resin composition comprising the block copolymer are improved. Meanwhile, the ethylene monomer unit and the alpha-olefin-based monomer unit of the olefin-based polymer block may be present in the form of a random copolymer in the olefin-based polymer block.

According to an embodiment of the present invention, an alpha-olefin-based monomer forming the alpha-olefin-based monomer unit may be one or more selected from the group consisting of 1-propene, 1-butene, 1-pentene, 3-methyl-1-butene, 1-hexene, 4-methyl-1-pentene, 3-methyl-1-pentene, 1-heptene, 1-octene, 1-decene, 1-undecene, 1-dodecene, 1-tetradecene, 1-hexadecene, 1-eicocene, 4,4-dimethyl-1-pentene, 4,4-diethyl-1-hexene, and 3,4-dimethyl-1-hexene.

According to an embodiment of the present invention, the content of the olefin-based polymer block with respect to the total content of the block copolymer may be about 40 wt% to about 90 wt%, about 60 wt% to about 85 wt%, or about 65 wt% to about 80 wt%, and within this range, there is an effect in that the mechanical properties and processability of the block copolymer are excellent.

According to an embodiment of the present invention, if the olefin-based polymer block comprises the ethylene monomer unit, the content of the ethylene monomer unit with respect to the total content of the block copolymer may be about 20 wt% to about 70 wt%, about 30 wt% to about 60 wt%, or about 35 wt% to about 50 wt%, and within this range, there is an effect in that the mechanical properties and processability of the block copolymer are excellent.

According to an embodiment of the present invention, if the olefin-based polymer block comprises the alpha-olefin-based monomer unit, the content of the alpha-olefin-based monomer unit with respect to the total content of the block copolymer may be, about 10 wt% to about 50 wt%, about 15 wt% to about 45 wt%, or about 20 wt% to about 40 wt%, and within this range, there is an effect in that the mechanical properties and processability of the block copolymer are excellent.

According to an embodiment of the present invention, the resin composition may comprise the polyolefin-based resin in an amount of about 40 wt% to about 80 wt% and the block copolymer in an amount of about 20 wt% to about 60 wt%. As a specific example, the resin composition may comprise the polyolefin-based resin in an amount of about 40 wt% or greater, about 41 wt% or greater, about 42 wt% or greater, about 43 wt% or greater, about 44 wt% or greater, about 45 wt% or greater, about 46 wt% or greater, about 47 wt% or greater, about 48 wt% or greater, about 49 wt% or greater, or about 50 wt% or greater, and also, about 80 wt% or less, about 79 wt% or less, about 78 wt% or less, about 77 wt% or less, about 76 wt% or less, about 75 wt% or less, about 74 wt% or less, about 73 wt% or less, about 72 wt% or less, about 71 wt% or less, or about 70 wt% or less.

According to an embodiment of the present invention, the resin composition may comprise the polyolefin-based resin and the block copolymer at a weight ratio of about 1:0.11 to about 1:9, and as a specific example, may comprise the polyolefin-based resin and the block copolymer at a weight ratio of about 1:0.11 to about 4, about 1:0.11 to about 3, about 1:0.11 to about 2.4, about 1:0.11 to about 1.5, about 1:0.11 to about 1, about 1:0.17 to about 1.5, about 1:0.17 to about 1.5, or about 1:0.17 to about 0.25.

According to an embodiment of the present invention, when the resin composition comprises the polyolefin-based resin and the block copolymer in the above-described range, it is possible to further improve the impact strength of the resin composition, and prevent degradation in fluidity, so that processability may be improved.

According to an embodiment of the present invention, the resin composition may selectively further comprise an inorganic filler to improve the mechanical properties of the resin composition. The inorganic filler may specifically be a powder-type filler, a flake-type filler, a fiber-type filler, or a balloon-type filler, and any one thereof, or a mixture of two or more thereof may be used. As a specific example, the powder-type filler may be a natural silicic acid or silicate such as fine powder talc, kaolinite, calcined clay, or sericite, a carbonate such as a precipitated calcium carbonate, a heavy calcium carbonate or a magnesium carbonate, a hydroxide such as an aluminum hydroxide or a magnesium hydroxide, an oxide such as a zinc oxide, a magnesium oxide, or a titanium oxide, a synthetic silicic acid or silicate such as a hydrous calcium silicate, a hydrous aluminum silicate, a hydrous silicic acid or an silicic anhydride, and silicon carbide, and the like. In addition, the flake-type filler may be mica, and the like. In addition, the fiber-type filler may be a basic sulfuric acid magnesium whisker, a calcium titanate whisker, a boric acid aluminum whisker, sepiolite, processed mineral fiber (PMF), potassium titanate, or the like. In addition, the balloon-type filler may be a glass balloon, and the like. Among the above, the inorganic filler may be talc.

According to an embodiment of the present invention, the inorganic filler may be surface-treated to improve the strength properties and molding processability of the resin composition. Specifically, the inorganic filler may be physically or chemically surface-treated using a surface treatment agent such as a silane coupling agent, a higher fatty acid, a fatty acid metal salt, an unsaturated organic acid, an organic titanate, a resin acid, or polyethylene glycol.

According to an embodiment of the present invention, the inorganic filler may have an average particle diameter (D₅₀) of about 1 µm to about 20 µm, specifically about 3 µm to about 15 µm, and more specifically about 5 µm to about 10 µm, and within this range, the resin composition may be uniformly dispersed, so that the mechanical properties may be further improved. The average particle diameter (D₅₀) of the inorganic filler may be defined as a particle diameter at 50% in volume cumulative particle diameter distribution. In the present invention, the average particle diameter (D₅₀) of the inorganic filler may be measured by, for example, electron microscopy observation using scanning electron microscopy (SEM), field emission scanning electron microscopy (FE-SEM), or the like, or by a laser diffraction method. More specifically, when measured by a laser diffraction method, inorganic filler particles may be dispersed in a dispersion medium, and then introduced into a commercially available laser diffraction particle size measuring device (e.g., Microtrac MT 3000) to measure the average particle diameter (D₅₀) at 50% in volume cumulative particle diameter distribution.

According to an embodiment of the present invention, the inorganic filler may be comprised, with respect to 100 parts by weight of the total content of the polyolefin-based resin and the block copolymer, in an amount of about 0.1 parts by weight to about 40 parts by weight, or about 0.1 parts by weight to about 20 parts by weight, and within this range, degradation in processability may be prevented and the mechanical properties may be further improved.

According to an embodiment of the present invention, the resin composition may be prepared by adding a polyolefin-based resin and optional an inorganic filler to a block copolymer, followed by mixing, and then heat-treating the mixture. The mixing process may be performed according to a typical method. Specifically, the mixing may be performed using a super mixer or a ribbon mixer.

According to an embodiment of the present, during the mixing, if necessary, an additive such as an antioxidant, a thermal stabilizer, a UV stabilizer, an antistatic agent, and the like may be further comprised, and in order to improve paintability, an additive having a small amount of adhesive resin or polar group may be selectively further used within an appropriate content range.

According to an embodiment of the present invention, the heat-treatment may be performed at a temperature equal to or higher than a melting point of the polyolefin-based resin, for example equal to or lower than 210 °C. The heat treatment process may be performed using various blending processing devices such as a twin-screw extruder, a single-screw extruder, a roll-mill, a kneader, or a banbury mixer.

According to an embodiment of the present invention, the resin composition is useful for hollow molding, extrusion molding, or injection molding in various fields and applications for packaging, construction, household products, and the like, such as materials for automobiles, electric wires, toys, textiles, or medical products. Particularly, the thermoplastic resin composition has excellent toughness and impact strength at a low temperature as well as room temperature, and also has excellent physical properties such as heat resistance and rigidity, and thus, may be usefully used for interior and exterior parts of automobiles.

The present invention provides a method for preparing a resin composition. The method for preparing a resin composition may be a method for preparing the above-described resin composition.

According to an embodiment of the present invention, the method for preparing a resin composition may comprise, in the presence of a chain transfer agent, polymerizing one or more olefin-based monomers by using a transition metal catalyst to prepare an olefin-based polymer block intermediate (S10), in the presence of the olefin-based polymer block intermediate prepared in the step S10, introducing a polymerization initiator and an aromatic vinyl-based monomer and performing a polymerization to prepare a block copolymer (S20), and blending the block copolymer prepared in the step S20 and a polyolefin-based resin (S30).

According to an embodiment of the present invention, the step S10 step is a step of polymerizing, in the presence of a chain transfer agent, one or more olefin-based monomers by using a transition metal catalyst to prepare an olefin-based polymer block intermediate.

According to an embodiment of the present invention, the transition metal catalyst is a catalyst for growing an olefin-based polymer through coordinative chain transfer polymerization, and may be a catalyst composition comprising the transition metal catalyst, which is a main catalyst, a co-catalyst, and trialkylaluminum.

According to an embodiment of the present invention, the transition metal catalyst may be a transition metal catalyst represented by Formula 1 below.

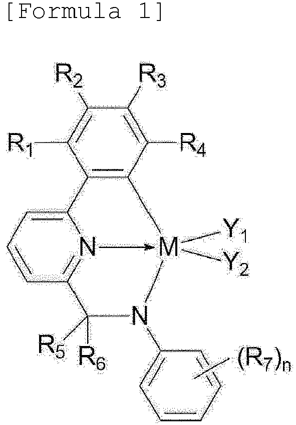

In Formula 1 above, M is Ti, Zr, or Hf, R₁ to R₄ are each independently hydrogen, a substituted or unsubstituted C1 to C20 alkyl group, a substituted or unsubstituted C3 to C20 cycloalkyl group, or a substituted or unsubstituted C6 to C20 aryl group, wherein two or more adjacent ones thereof may be connected to each other and form a ring, R₅ and R₆ are each independently hydrogen, a substituted or unsubstituted C1 to C20 alkyl group, a substituted or unsubstituted C3 to C20 cycloalkyl group, or a substituted or unsubstituted C6 to C20 aryl group, wherein the substitution is performed by a C1 to C12 alkyl group,R₇ is each independently a substituted or unsubstituted C4 to C20 alkyl group, a substituted or unsubstituted C4 to C20 cycloalkyl group, or a substituted or unsubstituted C6 to C20 aryl group, n is 1 to 5, and Y₁ and Y₂ are each independently a halogen group, a C1 to C20 alkyl group, a C2 to C20 alkenyl group, a C2 to C20 alkynyl group, a C3 to C20 cycloalkyl group, a C6 to C20 aryl group, a C7 to C20 alkylaryl group, a C7 to C20 arylalkyl group, a C5 to C20 heteroaryl group, a C1 to C20 alkoxy group, a substituted or unsubstituted C5 to C20 aryloxy group, a C1 to C20 alkylamino group, a C5 to C20 arylamino group, a C1 to C20 alkylthio group, a C5 to C20 arylthio group, a C1 to C20 alkylsilyl group, a C5 to C20 arylsilyl group, a hydroxyl group, an amino group, a thio group, a silyl group, a cyano group, or a nitro group.

According to an embodiment of the present invention, in Formula 1 above, M may be Hf, and R₁ to R₄ may each independently be hydrogen, or a substituted or unsubstituted C1 to C20 alkyl group, wherein two or more adjacent ones thereof may be connected to each other and form a ring. Alternatively, R₁ and R₂ may each independently be a C1 to C20 alkyl group, which are connected to each other and form a C5 to C20 aromatic ring, and R₃ and R₄ may be hydrogen.

According to an embodiment of the present invention, in Formula 1 above, R₅ and R₆ may each independently be hydrogen, or a substituted or unsubstituted C6 to C20 an aryl group, wherein the substitution may be substitution by a C1 to C6 alkyl group.

According to an embodiment of the present invention, in Formula 1 above, R₇ may each independently be a substituted or unsubstituted C4 to C20 alkyl group, a substituted or unsubstituted C4 to C20 cycloalkyl group, or a substituted or unsubstituted C6 to C20 aryl group.

According to an embodiment of the present invention, in Formula 1 above, n may be 1 to 3, preferably 2, and X₁ and X₂ may each independently be a C1 to C20 alkyl group.

According to an embodiment of the present disclosure, the transition metal compound represented by Formula 1 above may be a compound represented by Formula 1a below.

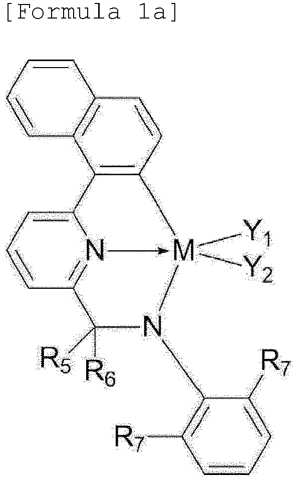

In Formula 1a above, M, R₅ to R₇, and Y₁ and Y₂ are the same as defined above.

According to an embodiment of the present invention, the transition metal compound represented by Formula 1 above may be selected from the following compounds, but is not limited thereto. All transition metal compounds corresponding to Formula 1 are comprised in the present invention.

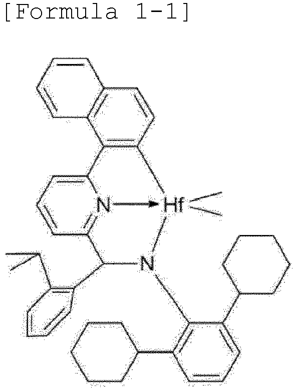

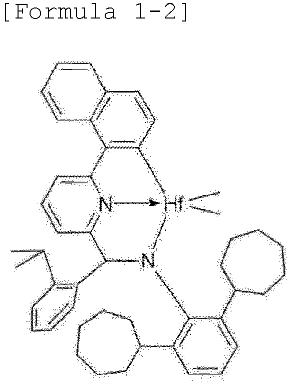

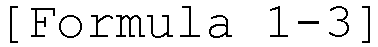

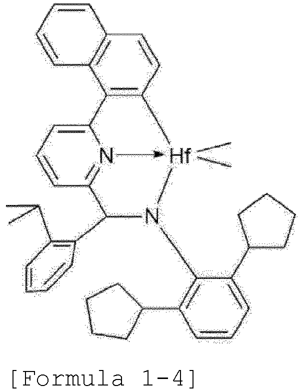

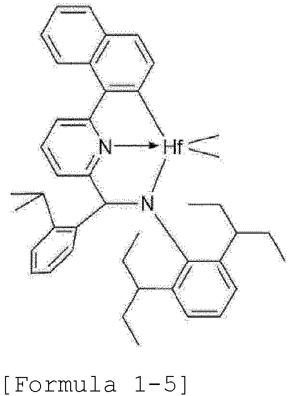

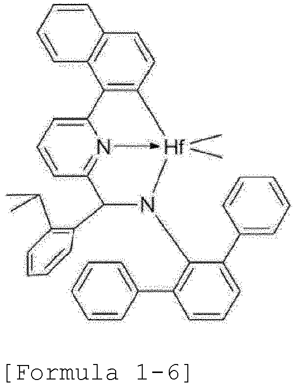

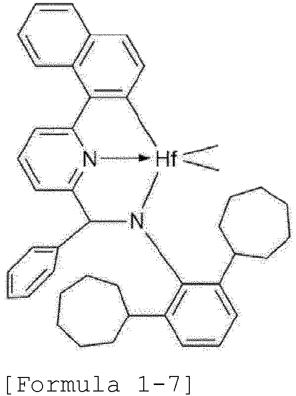

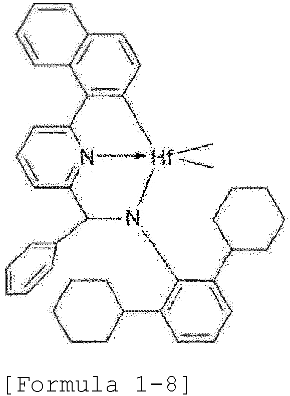

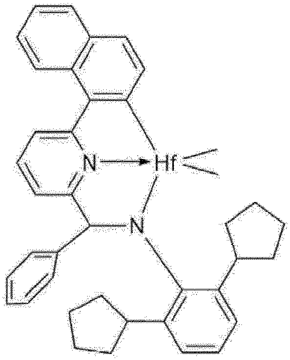

According to an embodiment of the present disclosure, the transition metal compound represented by Formula 1 above may be prepared using a ligand compound represented by Formula 2 below.

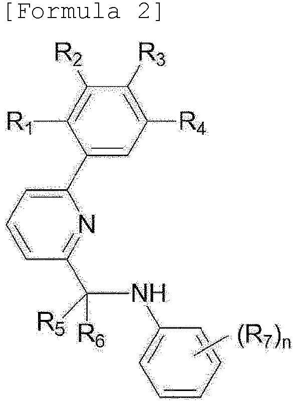

In Formula 2 above, R₁ to R₄ are each independently a substituted or unsubstituted C1 to C20 alkyl group, a substituted or unsubstituted C3 to C20 cycloalkyl group, or a substituted or unsubstituted C6 to C20 aryl group, wherein two or more adjacent ones thereof may be connected to each other and form a ring, R₅ and R₆ are each independently hydrogen, a substituted or unsubstituted C1 to C20 alkyl group, a substituted or unsubstituted C3 to C20 cycloalkyl group, or a substituted or unsubstituted C6 to C20 aryl group, wherein the substitution is performed by a C1 to C12 alkyl group, R₇ is each independently a substituted or unsubstituted C4 to C20 alkyl group, a substituted or unsubstituted C4 to C20 cycloalkyl group, or a substituted or unsubstituted C6 to C20 aryl group, and n is 1 to 5.

According to an embodiment of the present disclosure, the transition metal compound represented by Formula 1 above may be prepared by reacting a ligand compound represented by Formula 2 below and a compound represented by Formula 3 below.

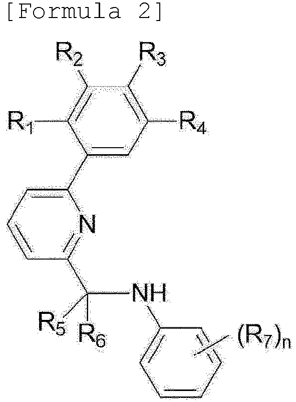

[Formula 3] M(Y₁Y₂)₂

In the above formulas,
R₁ to R₇, M, and Y₁ and Y₂ are the same as defined above.

According to an embodiment of the present invention, when preparing the transition metal compound represented by Formula 1 below, the reaction may be performed by the following process.

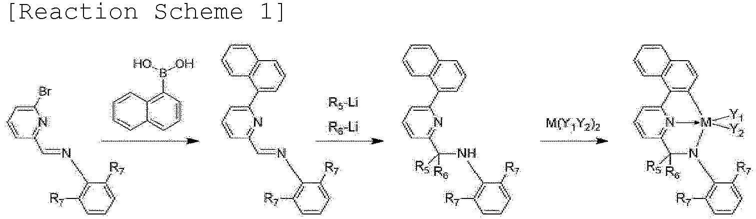

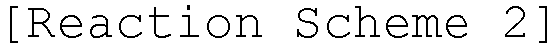

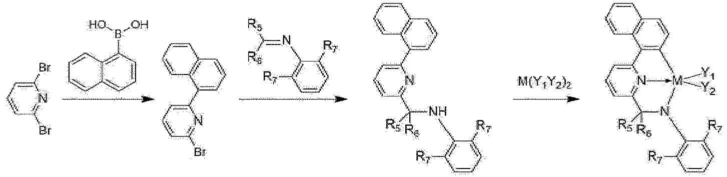

According to an embodiment of the present invention, the organic zinc compound is a material used as a chain transfer agent to induce chain transfer during the preparation in a polymerization reaction such that a copolymer is prepared, wherein the chain transfer agent may be a chain transfer agent for preparing a block copolymer by coordinative chain transfer polymerization.

According to an embodiment of the present invention, the chain transfer agent may comprise an organic zinc compound represented by Formula 5 below, and specifically, the chain transfer agent may comprise 96 mol% or greater of the organic zinc compound represented by Formula 5 below, and preferably the chain transfer agent may not comprise any side reaction products in addition to the organic zinc compound represented by Formula 5 below.

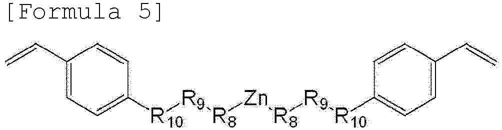

In Formula 5 above, R₈ and R₁₀ may each independently be a single bond or a C1 to C10 alkylene group, R₉ may be a C1 to C10 alkylene group or -SiR₁₁R₁₂-, and R₁₁ and R₁₂ may each be independently a C1 to C10 alkyl group.

According to an embodiment of the present invention, in Formula 5 above, R₈ and R₁₀ may each independently be a single bond or a C1 to C10 alkylene group, R₉ may be a C1 to C10 alkylene group or -SiR₁₁R₁₂-, and R₁₁ and R₁₂ may each independently be a C1 to C10 alkyl group.

According to an embodiment of the present invention, the organozinc compound represented by Formula 5 above may be one selected from the group consisting of organozinc compounds represented by Formulas 5-1 to 5-4, and preferably any one of Formulas 5-3 and 5-4.

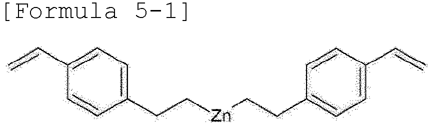

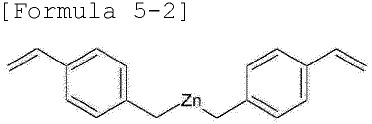

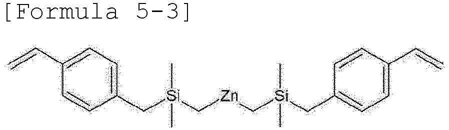

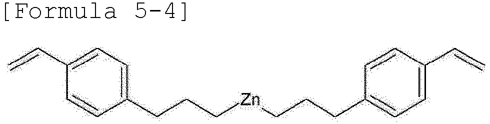

According to an embodiment of the present invention, the chain transfer agent may comprise 97 mol% or greater of the organozinc compound Formula 5 above, more preferably 98 mol% or greater, or 99 mol% or greater, and most preferably, may not comprise any side reaction products in addition to the organozinc compound. This means that the chain transfer agent does not comprise any side reaction products such as a dimer in addition to the organozinc compound represented by Formula 5, as well as impurities containing chlorine or magnesium. That is, the chain transfer agent may comprise only the organozinc compound represented by Formula 5 above.

According to an embodiment of the present invention, when one or more olefin-based monomers, as a specific example, ethylene and an alpha-olefin-based monomer are reacted using the organic zinc compound represented by Formula 5 above as a chain transfer agent in the presence of a catalyst composition comprising a transition metal compound, the ethylene and the alpha-olefin-based monomer are inserted between zinc (Zn) and R₁₀ of the organozinc compound, so that polymerization may be performed.

According to an embodiment of the present invention, when an olefin-based polymer block is prepared by reacting ethylene and an alpha-olefin-based monomer by using a compound of Formula 5 above as the organic zinc compound, an olefin-based polymer block intermediate is prepared, and the olefin-based polymer block intermediate may be represented by Formula 6 below.

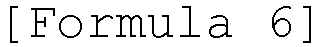

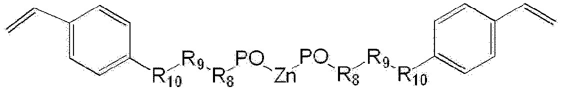

In Formula 6 above, R₈ and R₁₀ may each independently be a single bond or a C1 to C10 alkylene group, R₉ may be a C1 to C10 alkylene group or -SiR₁₁R₁₂-, R₁₁ and R₁₂ may each independently be a C1 to C10 alkyl group, and PO may be an olefin-based polymer block.

According to an embodiment of the present invention, the organozinc compound may be prepared by a preparation method comprising steps of preparing a Grignard reagent containing a styrene moiety, and reacting the prepared Grignard reagent with a zinc compound to prepare an organozinc compound represented by Formula 5 above, and the organozinc compound may be alkyl zinc alkoxide.

According to an embodiment of the present invention, the organozinc compound represented by Formula 5 above prepared according to the preparation method of an organozinc compound is synthesized as a single compound, and thus does not comprise any side reaction products such as a dimer, and furthermore, does not comprise impurities containing chlorine, which may act as a catalytic poison, such as organic zinc chloride (R-Zn-Cl). In addition, when an organozinc compound represented by Formula 5 above is prepared according to the preparation method of an organozinc compound, the organozinc compound is synthesized as a single compound, so that there is an effect in that synthesis reproducibility is excellent. Meanwhile, when preparing an organozinc compound, in order not to comprise side reaction products and impurities as in the present invention, it may be important to select a Grignard reagent containing a styrene moiety and a zinc compound.

According to an embodiment of the present invention, the Grignard reagent containing a styrene moiety may be represented by Formula 7 below.

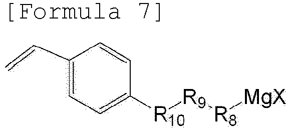

In Formula 7 above, R₈ and R₁₀ may each independently be a single bond or a C1 to C10 alkylene group, R₉ may be a C1 to C10 alkylene group or -SiR₁₁R₁₂-, R₁₁ and R₁₂ may each independently be a C1 to C10 alkyl group, and X may be a halogen group.

In addition, according to an embodiment of the present invention, in Formula 7 above, R₈ and R₁₀ may each independently be a single bond or a C1 to C10 alkylene group, R₉ may be a C1 to C10 alkylene group or -SiR₁₁R₁₂-, and R₁₁ and R₁₂ may each independently be a C1 to C10 alkyl group.

According to an embodiment of the present invention, the Grignard reagent containing a styrene moiety and represented by Formula 7 above may be one selected from the group consisting of Grignard reagents each containing a styrene moiety represented by Formulas 7-1 to 7-4 below.

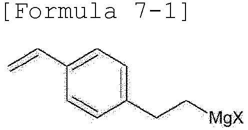

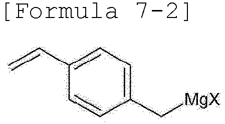

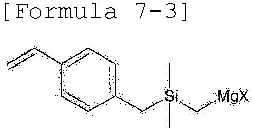

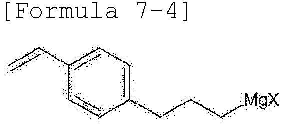

According to an embodiment of the present invention, the Grignard reagent containing a styrene moiety and represented by Formula 7 above may be prepared through a reaction between a halide in which halide (-X) is substituted for R₈ and magnesium, specifically, magnesium powder or a magnesium metal.

According to an embodiment of the present invention, the Grignard reagent containing a styrene moiety and represented by Formula 7 above may be prepared through a reaction between a compound represented by Formula 8 below and magnesium, specifically, magnesium powder or a magnesium metal.

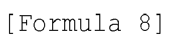

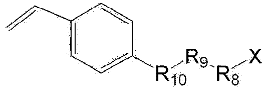

In Formula 8 above, R₈ and R₁₀ may each independently be a single bond or a C1 to C10 alkylene group, R₉ may be a C1 to C10 alkylene group or -SiR₁₁R₁₂-, R₁₁ and R₁₂ may each independently be a C1 to C10 alkyl group, and X may be a halogen group.

According to an embodiment of the present invention, in Formula 8 above, R₈ and R₁₀ may each independently be a single bond or a C1 to C3 alkylene group, R₉ may be a C1 to C3 alkylene group or -SiR₁₁R₁₂-, R₁₁ and R₁₂ may each independently be a C1 to C3 alkyl group, and X may be a halogen group.

According to an embodiment of the present invention, in Formula 8 above, R₈ and R₁₀ may each independently be a single bond or a C1 alkylene group, R₉ may be a C1 alkylene group or -SiR₁₁R₁₂-, R₁₁ and R₁₂ may each independently be a C1 alkyl group, and X may be one halogen group selected from the group consisting of Cl, Br, and I.

According to an embodiment of the present invention, a compound represented by Formula 8 above may be one selected from the group consisting of compounds represented by Formulas 8-1 to 8-4 below.

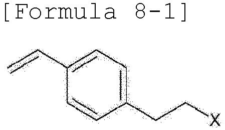

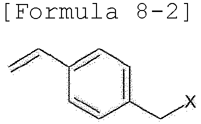

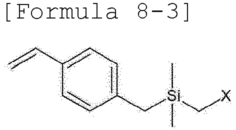

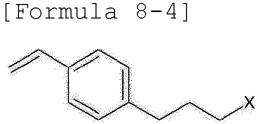

According to an embodiment of the present invention, when preparing the Grignard reagent containing a styrene moiety and represented by Formula 7 above, the reaction between the compound represented by Formula 8 above and the magnesium powder or magnesium metal may be performed at an excessive mole percent of magnesium powder or magnesium metal to 1 mole of the compound represented by the Formula 8 above based on a mole percent, that is, at a mole percent of greater than 1 mole, and in this case, about 50 mol% or greater, about 60 mol% or greater, about 70 mol% or greater, about 80 mol% or greater, about 90 mol% or greater, about 95 mol% or greater, or about 99 mol% or greater of the compound represented by Formula 8 above may be converted into a Grignard reagent containing a styrene moiety.

According to an embodiment of the present invention, the reaction between the compound represented by Formula 8 above and the magnesium powder or magnesium metal may be performed at a molar ratio of greater than 1:1 to 10, greater than 1:1 to 5, greater than 1:1 to 2, or 1:1.01 to 1.60 based on the molar ratio, and within this range, the conversion rate to the Grignard reagent containing a styrene moiety and represented by Formula 7 above is high, while the content of residual magnesium after the reaction is minimized to facilitate the removal of residual magnesium powder or magnesium metal.

According to an embodiment of the present invention, when preparing an organozinc compound, the zinc compound is required to be a zinc compound capable of inducing substitution of two organic groups of the same type with zinc based on zinc. Therefore, zinc chloride (ZnCl₂) may be easily considered, but when zinc chloride is used as a zinc compound, there is a problem in that impurities (e.g., alkyl zinc chloride) containing chlorine, which may act as a catalytic poison, remain. Therefore, in the present invention, alkyl zinc alkoxide is used as the zinc compound.

According to an embodiment of the present invention, the alkyl group of the alkyl zinc alkoxide may be a C1 to C10 alkyl group, a C1 to C5 alkyl group, a C1 to C3 alkyl group, or an ethyl group, and the alkoxide group may be a C1 to C10 alkoxide group, a C1 to C5 alkoxide group, a C1 to C3 alkoxide group, or a methoxide group. As a specific example, the zinc compound may be ethyl zinc methoxide.

According to an embodiment of the present invention, the alkyl zinc alkoxide may be prepared from dialkyl zinc. As a specific example, the alkyl zinc alkoxide may be prepared by reacting dialkyl zinc with alcohol in-situ. At this time, the alkyl group of the dialkyl zinc may be the same as the alkyl group of the alkyl zinc alkoxide described above, and the alcohol may be an alcohol in which hydrogen is bonded to the alkoxide group of the alkyl zinc alkoxide described above.

According to an embodiment of the present invention, when the alkyl zinc alkoxide is used as the zinc compound, during the reaction of the Grignard reagent and the zinc compound, a magnesium halide alkoxide is generated, which is an insoluble salt that is easily filtered, so that it is possible to prevent impurities from remaining.

According to an embodiment of the present invention, the reaction between the Grignard reagent and the zinc compound may be performed at a molar ratio of 10:1 to 1:10, 5:1 to 1:5, 3:1 to 1:3, 2:1 to 1:2, 1.5:1 to 1:1.5, or 1:1 based on the molar ratio, and within this range, the organozinc compound is synthesized as a single compound, and thus does not comprise any side reaction products such as a dimer, and does not comprise impurities containing chlorine, which may act as a catalytic poison, and has an effect of easily removing impurities containing magnesium, which may act as a catalytic poison.

According to an embodiment of the present invention, all the steps and all the reaction of the preparation method of the zinc compound may be performed in an organic solvent, and the reaction temperature and reaction pressure may be adjusted according to the purpose of increasing yield and purity.

The preparation method of the zinc compound according to an embodiment of the present invention replaces a borane-based compound containing a typical styrene moiety with a Grignard reagent containing a styrene moiety, and replaces alkyl zinc or zinc chloride with alkyl zinc alkoxide, so that a catalytic poison may be completely removed.

According to an embodiment of the present invention, the catalyst composition may comprise an aluminoxane-based compound and trialkylaluminum. As a specific example, the catalyst composition may comprise an aluminoxane-based compound represented by Formula 9 below, and trialkylaluminum. As described above, if the catalyst composition comprises an aluminoxane-based compound and trialkylaluminum, when preparing a resin composition from a block copolymer prepared therefrom, the particle size and degree of dispersion of the block copolymer may be controlled to control the size of a domain region and the distance between a plurality of domain regions.

According to an embodiment of the present invention, the aluminoxane-based compound represented by Formula 9 below may serve as a co-catalyst, a scavenger, or a co-catalyst and scavenger.

[Formula 9] -[Al(Rₐ)-O]ₘ-

In Formula 9 above, Rₐ is each independently a halogen radical, a C1 to C20 hydrocarbyl radical, or a C1 to C20 hydrocarbyl radical substituted with halogen, and m is an integer of 2 or greater.

According to an embodiment of the present invention, the compound represented by Formula 9 above is not particularly limited as long as being alkylaluminoxane. Preferred examples comprise modified methylaluminoxane (MMAO), methylaluminoxane (MAO), ethylaluminoxane, isobutylaluminoxane, butylaluminoxane, and the like, and a particularly preferred compound may be modified methylaluminoxane (MMAO).

According to an embodiment of the present invention, the compound represented by Formula 9 above is a compound in the form of an oligomer generated by the reaction of alkyl aluminum and water, and when the compound is used as a co-catalyst, chain transfer is reduced. Therefore, a high molecular weight copolymer may be prepared, and the generation of homo-polyolefin as a side reaction may also be prevented. Therefore, in the end, a block copolymer exhibiting excellent physical properties such as high tensile strength may be prepared.

According to an embodiment of the present invention, the trialkylaluminum may serve as an additive for controlling the structure of the block copolymer by inducing an alkyl exchange with the olefin-based polymer block intermediate when the block copolymer is polymerized. As a specific example, the trialkylaluminum may be trialkylaluminum comprising a C1 to C12 alkyl group, and as a specific example, may be trialkylaluminum comprising a C3 to C12, C6 to C12, C6 to C10, or C6 to C8 alkyl group. As a more specific example, the trialkylaluminum may be one or more selected from the group consisting of trimethylaluminum, triethylaluminum, tri-n-propylaluminum, tri-n-butylaluminum, tri-n-pentylaluminum, trihexylaluminum, trioctylaluminum, and tridecyl aluminum, and as a more specific example, may be trioctylaluminum.

According to an embodiment of the present invention, the catalyst composition may comprise the aluminoxane-based compound and the trialkylaluminum at a molar ratio of 1:0.01 to 10.0. As a specific example, the catalyst composition may comprise the aluminoxane-based compound and the trialkylaluminum at a molar ratio of 1:0.01 or greater, 0.02 or greater, 0.03 or greater, 0.04 or greater, 0.05 or greater, 0.06 or greater, 0.07 or greater, 0.08 or greater, 0.09 or greater, 0.1 or greater, 0.2 or greater, or 0.3 or greater, and may also comprise 10.0 or less, 9.0 or less, 8.0 or less, 7.0 or less, 6.0 or less, 5.0 or less, 4.0 or less, 3.0 or less, 2.0 or less, 1.0 or less, 0.9 or less, 0.8 or less, 0.7 or less, or 0.6 or less, and within this range, it is easy to control the size of the domain region of the resin composition and the distance between the plurality of domain regions.

According to an embodiment of the present invention, when the transition metal compound represented by Formula 1, the aluminoxane-based compound represented by Formula 9, and the trialkylaluminum are combined and used as the catalyst composition, a block copolymer satisfying the above-described conditions may be manufactured.

According to an embodiment of the present invention, the catalyst composition may be used in a form in which the transition metal compound represented by Formula 1, the aluminoxane-based compound represented by Formula 9, and the trialkylaluminum are supported on a carrier. As the carrier, silica or alumina may be used, but the carrier is not limited thereto.

According to an embodiment of the present invention, the catalyst compound comprise a compound represented by Formula 10 below.

[Formula 10] [L-H]⁺[Z(A)₄]⁻ or [L]⁺[Z(A)₄]⁻

In Formula 10 above, Z is a Group 13 element, A is each independently a C6 to C20 aryl in which one or more hydrogen atoms may be substituted with a substituent, or a C1 to C20 alkyl, and the substituent of A is halogen, a C1 to C20 hydrocarbyl, a C1 to C20 alkoxy, or a C6 to C20 aryloxy.

According to an embodiment of the present invention, the step S10 may be performed in a uniform solution state. At this time, as a solvent, a hydrocarbon solvent or olefin monomer itself may be used as a medium. An example of the hydrocarbon solvent may be a C4 to C20 aliphatic hydrocarbon solvent, specifically isobutane, hexane, cyclohexane, methylcyclohexane, or the like. The solvent may be used alone, or in combination of two or more thereof.

According to an embodiment of the present invention, a polymerization temperature of the step S10 may be changed depending on reaction materials, reaction conditions, and the like, but may specifically be about 70 °C to about 170 °C, specifically about 80 °C to about 150 °C, or about 90 °C to about 120 °C. Within the above range, the solubility of a polymer may be increased and a catalyst may be thermally stabilized.

According to an embodiment of the present invention, the polymerization in the step S10 may be performed in a batch, semi-continuous, or continuous manner, and may also be performed in two or more steps having different reaction conditions.

According to an embodiment of the present invention, an olefin-based polymer block intermediate prepared in the step S10 may serve as a precursor for preparing the block copolymer of the present invention by a polymerization reaction in the step S20 to be described below.

According to an embodiment of the present invention, the olefin-based monomer may be ethylene and an alpha-olefin-based monomer, and the alpha-olefin-based monomer is the same as that previously described with reference to the resin composition.

According to an embodiment of the present invention, the step S20 is to prepare a block copolymer by reacting an aromatic vinyl-based monomer with the olefin-based polymer block intermediate in the presence of a polymerization initiator.

According to an embodiment of the present invention, in the step S20, an aromatic vinyl-based monomer may be continuously inserted between a zinc-carbon bond of (polyolefinyl)₂Zn comprised in the olefin-based polymer block intermediate formed by the step S10 to form an aromatic vinyl-based polymer block chain, and at the same time, a styrene group derived from a chain extender present at an end of the compound prepared by the step S10 participates as a copolymerization site with the aromatic vinyl-based monomer to be connected to the aromatic vinyl-based polymer block chain. In addition, a block copolymer prepared through the above-described process may be easily quenched by a reaction of an end group with water, oxygen, or an organic acid, through which the block copolymer is converted into an industrially useful polyolefin-polystyrene-based multi-block copolymer.

According to an embodiment of the present invention, the aromatic vinyl-based monomer is the same as that previously described with reference to the resin composition.

According to an embodiment of the present invention, the polymerization initiator may be an anionic polymerization initiator, and as a specific example, may be an alkyl lithium compound represented by Formula 11 below.

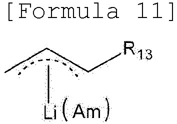

In Formula 11 above, R₁₃ is hydrogen or a C1 to C20 hydrocarbyl, and Am is an amine-based compound represented by Formula 12 below, and 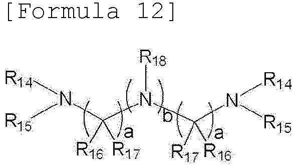 in Formula 12 above, R₁₄ to R₁₈ are each independently hydrogen or a C1 to C20 hydrocarbyl, and a and b are each independently an integer of 0 to 3, wherein the a and the b are not simultaneously 0.

According to an embodiment of the present invention, R₁₃ may be hydrogen, a C1 to C20 alkyl, a C3 to C20 cycloalky, or a substituted or unsubstituted C7 to C20 arylalkyl, R₁₄ to R₁₈ may each independently be hydrogen, a C1 to C20 alkyl, a C1 to C20 alkenyl, a C3 to C20 cycloalkyl, a substituted or unsubstituted C6 to C20 aryl, or a substituted or unsubstituted C7 to C20 arylalkyl, and a and b may each independently be an integer of 0 to 2.

According to an embodiment of the present invention, R₁₃ to R₁₈ may each independently be hydrogen or a C1 to C20 alkyl, wherein a may be 1 or 2, and b may be 0 or 1. Specifically, a may be an integer of 1 to 3, and b may be an integer of 0 to 3, and more specifically, a may be 1 or 2, and b may be an integer of 0 to 2, and even more specifically, a may be 1 or 2, and b may be 0 or 1.

According to an embodiment of the present invention, in Formula 11 above, the Am may specifically be represented by Formula 13 or Formula 14 below.

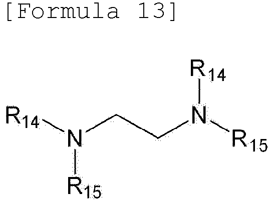

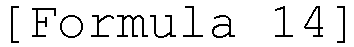

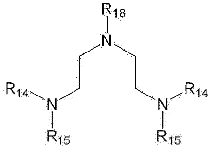

In the above formulas, R₁₄, R₁₅, and R₁₈ are each independently hydrogen or a C1 to C20 alkyl.

According to an embodiment of the present invention, in Formula 11 above, the Am may specifically be represented by Formula 13a or Formula 14a below.

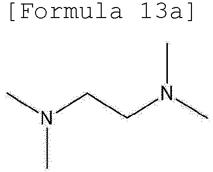

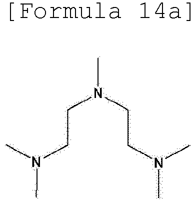

According to an embodiment of the present invention, the polymerization initiator represented by Formula 11 may be prepared by the following preparation method. A method for preparing the polymerization initiator comprises a process of performing a reaction by introducing a compound represented by Formula 16 below and a compound represented by Formula 12 below in the presence of a compound represented by Formula 15 below.

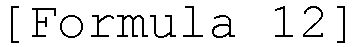

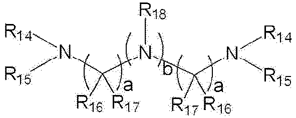

[Formula 15] B-Li

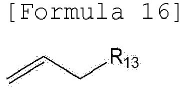

In the above formulas, R₁₃ to R₁₈ are each independently hydrogen or a C1 to C20 hydrocarbyl, a and b are each independently an integer of 0 to 3, wherein the a and the b are not simultaneously 0, and B is a C1 to C20 alkyl.

According to an embodiment of the present invention, R₁₃ may be hydrogen or a C1 to C20 hydrocarbyl, R₁₄ to R₁₈ may each independently be hydrogen, a C1 to C20 alkyl, a C1 to C20 alkenyl, a C3 to C20 cycloalkyl, a substituted or unsubstituted C6 to C20 aryl, or a substituted or unsubstituted C7 to C20 aryl alkyl, a and b may each independently be an integer of 0 to 2, and B may be a C1 to C12 alkyl.

According to an embodiment of the present invention, R₁₄ to R₁₈ may each independently be hydrogen or a C1 to C20 alkyl, a may be an integer of 1 or 2, b may be an integer of 0 or 1, and B may be a C1 to C8 alkyl. Specifically, a may be an integer of 1 to 3, and b may be an integer of 0 to 3, and more specifically, a may be 1 or 2, and b may be an integer of 0 to 2, and even more specifically, a may be 1 or 2, and b may be 0 or 1.

According to an embodiment of the present invention, an alkyl lithium compound represented by Formula 16 above may be, for example, n-BuLi, wherein n-BuLi is a material widely used as an initiator of anionic polymerization, and is easy to obtain and has excellent unit cost efficiency.

According to an embodiment of the present invention, in the method for preparing the polymerization initiator, the process of reacting a compound represented by Formula 16 above with a compound represented by Formula 15 above may be performed first, and thereafter, a compound of Formula 12 may be reacted therewith to prepare a compound of Formula 11 above. Specifically, the compound represented by Formula 16 above is reacted with the compound represented by Formula 15 above to produce allyl lithium is an intermediate, and the allyl lithium is reacted with the compound of Formula 12 to finally form the polymerization initiator of Formula 11 above.

According to an embodiment of the present invention, the process of performing a reaction by introducing the compound represented by Formula 16 above and the compound represented by Formula 12 above in the presence of the compound represented by Formula 15 above may be performed under a condition of no additional solvent. The condition of no additional solvent means that, in the presence of the compound represented by Formula 16 above, there is no separate compound which may be used as a solvent in addition to the compound represented by Formula 15 above and the compound represented by Formula 12 above, or means that, an additional solvent is present in a trace amount, and thus does not significantly react with the compound of Formula 15 above. When the reaction is performed under condition of no additional solvent, the reaction of the compound represented by Formula 15 and the compound represented by Formula 16 above is performed as a main reaction, so that the polymerization initiator of Formula 11 above may be effectively prepared. When there is a separate solvent, the polymerization initiator of Formula 11 above, a compound produced by reacting the compound represented by Formula 15 above with the compound represented by Formula 12 above, and a compound decomposed from the compound produced by reacting the compound represented by Formula 15 above with the compound represented by Formula 12 above are all mixed and present, and thus it is not effective.

According to an embodiment of the present invention, the polymerization initiator may be a silyl compound represented by Formula 17 below.

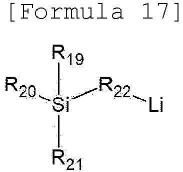

In Formula 17 above, R₁₉ to R₂₁ may each independently be hydrogen or a C1 to C20 hydrocarbyl, and R₂₂ may be a C1 to C20 divalent alkylene group. As a specific example, R₁₉ to R₂₁ may each independently be a C1 to C10 hydrocarbyl, and R₂₂ may be a C1 to C10 divalent alkylene group. As a more specific example, R₁₉ to R₂₁ may each independently be a C1 to C6 hydrocarbyl, and R₂₂ may be a C1 to C6 divalent alkylene group. In Formula 17 above, Li may be ion-bonded to carbon positioned at an end of the alkylene group of R₂₂, and accordingly, the silyl compound represented by Formula 17 above may serve as an anionic polymerization initiator.

According to an embodiment of the present invention, the silyl compound represented by Formula 17 above may be (trimethylsilyl)methyllithium. In addition, the silyl compound may be mixed with the amine-based compound represented by Formula 12 above and be used in a form in which a complex is formed.

According to an embodiment of the present invention, in the step S20, the polymerization initiator is used as an initiator, so that a polystyrene-based chain may be grown from the organic zinc compound prepared in the step S10, particularly polyolefin of (polyolephinyl)₂Zn in which an olefin-based polymer chain has grown centered on zinc (Zn).

According to an embodiment of the present invention, the step S30 is a step of blending the block copolymer prepared in the step S20 and a polyolefin-based resin. Here, the blending of the block copolymer and the polyolefin-based resin is the same as that previously described with reference to the resin composition.

Hereinafter, embodiments of the present invention will be described in detail so that those skilled in the art may easily carry out the present invention. However, the present invention may be embodied in many different forms, and is not limited to the embodiments set forth herein.

### Reagent and experiment condition

All experiments were performed under an inert atmosphere using a standard glove box and using a Schlenk technique. Toluene, hexane, and tetrahydrofuran (THF) were distilled with benzophenoneketyl and used. Methylcyclohexane (anhydrous grade) used in the polymerization reaction was purchased from Tokyo Chemical Industry (TCI) and purified with a Na/K alloy and used. Sublimation grade HfCl₄ was purchased from Streme and used as is.

¹H NMR(600 MHz) and ¹³C NMR(150 MHz) spectra were recorded using an ECZ 600 instrument (JEOL).

GPC data were analyzed in 1,2,4-trichlorobenzene at 160 °C using a PL-GPC 220 system equipped with a refractive index detector and two columns (PLarian Mixed-B 7.5 X 300 mm Varian [Polymer Lab]).

### (1) Manufacturing of transition metal compound represented by Formula 1-1

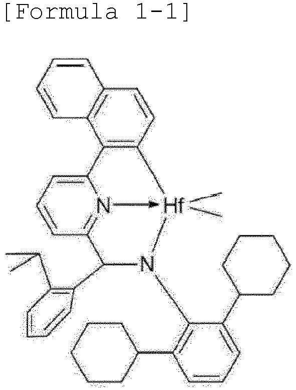

### 1) Preparation of ligand compound

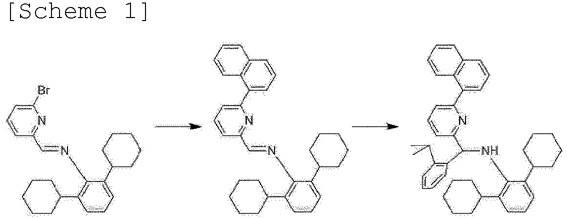

2,6-dicyclohexylaniline (0.772 g, 3.00 mmol) and 6-bromo-2-pyridinecarbox aldehyde (0.558 g, 3.00 mmol) were dissolved in toluene (5 mL) and molecular sieve was added thereto. The mixture was heated to 70 °C overnight while being stirred. After the filtration, the solvent was removed from a rotary evaporator. A yellow solid was obtained (1.07 g, 84%) .

¹H NMR (C₆D₆) : δ 8.41 (s, 1H, NCH), 8.09(d, J = 7.8 Hz, 1H), 7.53 (m, 3H), 6.85(d, *J* = 7.8 Hz, 1H), 6.63(t, *J* = 7.8 Hz, 1H), 2.74 (m, 2H), 1.87(d, *J* = 12 Hz, 4H), 1.64(d, *J* = 12.6 Hz, 4H), 1.54(d, J = 10.8 Hz, 2H), 1.39(quartet, *J* = 10.2 Hz, 4H), 1.11(m, 6H) ppm.

¹³C NMR(C₆D₆): δ 26.55, 27.33, 34.25, 39.30, 119.42, 124.32, 125.21, 129.83, 136.68, 138.82, 142.54, 148.94, 155.95, 162.06 ppm.

HRMS (EI): *m*/*z* calcd ([M⁺] C₂₄H₂₉BrN₂) 424.1514. Found: 424.1516.

Under nitrogen, the compound (1.07 g, 2.51 mmol), 1-naphthyl boronic acid (0.453 g, 2.64 mmol), Na₂CO₃ (0.700 g, 6.60 mmol), and toluene (5 mL) filled a Schlenk flask. A solution of (Ph₃P)₄Pd(7.83 mg, 0.00678 mmol) was added to degassed H₂O/EtOH(1 mL, *v*/*v,* 1:1) and toluene (1 mL). Light yellow oil was obtained by column chromatography on silica gel using ethyl acetate *(v*/*v,* 90:3:1) containing hexane and a small amount of triethylamine (0.712 g, 60%).

¹H NMR(C₆D₆): δ 8.70 (s, 1H, NCH), 8.41(d, J = 7.8 Hz, 1H), 8.31(d, *J* = 7.8 Hz, 1H), 7.68(d, *J* = 7.2 Hz, 1H), 7.65(d, *J* = 7.8 Hz, 1H), 7.54(d, *J* = 7.2 Hz, 1H), 7.27(m, 4H), 7.20(m, 4H), 2.93(m, 2H), 1.90(d, *J* = 12 Hz, 4H), 1.61(d, *J* = 13.2 Hz, 4H), 1.50(d, *J* = 12.6 Hz, 2H), 1.38(m, 4H), 1.11(m, 6H), ppm.

¹³C NMR (C₆D₆) : δ 26.63, 27.38, 34.35, 39.36, 119.21, 124.32, 124.98, 125.50, 126.15, 126.21, 126.64, 126.75, 128.15, 128.73, 129.38, 131.81, 134.52, 136.94, 137.14, 138.52, 149.48, 155.13, 159.79, 164.05 ppm.

HRMS (EI): *m*/*z* calcd([M⁺] C₃₄H₃₆N₂) 472.2878. Found: 472.2878.

2-isopropylphenyllithium (0.114 g, 0.904 mmol) dissolved in diethyl ether (8 mL) was added dropwise to a Schlenk flask containing the compound (0.247 g, 0.523 mmol) in diethyl ether (20 mL). Stirring was performed for 3 hours, and then an aqueous solution (10 mL) of ammonium chloride (0.30 g) was added, and the product was extracted with diethyl ether (3 X 10 mL). The resulting oil was dried at 60 °C overnight at high vacuum. A yellow solid was obtained (0.257 g, 83%).

¹H NMR (C₆D₆) : δ 8.24 (m, 1H), 7.90(m, 1H), 7.64 (m, 1H), 7.62(d, *J* = 7.8 Hz, 1H), 7.56(d, *J =* 7.2 Hz, 1H), 7.26(m, 3H), 7.22(m, 4H), 7.11 (m, 5H), 5.62(d, *J =* 5.4 Hz, 1H, NCH), 4.59 (d, *J* = 5.4 Hz, 1H, NH), 3.31 (septet, *J* = 7.2 Hz, 1H,CH), 2.74 (m, 2H), 1.79(d, *J =* 7.8 Hz, 2H), 1.64 (m, 4H), 1.54 (m, 4H), 1.32 (m, 4H), 1.08 (m, 2H), 1.03 (d, *J* = 6.6 Hz, 3H, CH₃), 1.00 (m, 1H), 0.980 (d, *J* = 6.6 Hz, 3H, CH₃), 0.921 (m, 3H) ppm.

¹³C NMR (C₆D₆) : δ 23.78, 24.45, 26.63, 27.42, 27.54, 28.96, 34.77, 35.08, 39.01, 67.64, 119.99, 122.89, 124.13, 124.80, 125.36, 125.77, 126.08, 126.46, 126.56, 126.71, 127.58, 128.55, 129.35, 131.84, 134.64, 136.94, 138.77, 141.88, 142.24, 144.97, 146.32, 159.28, 163.74 ppm.

HRMS (EI): *m*/*z* calcd ([M⁺] C₄₃H₄₈N₂) 592.3817. Found: 592.3819.

### 2) Preparation of transition metal compound

A Schlenk flask was filled with the above-prepared ligand compound (0.150 g, 0.253 mmol) in toluene (1.5 g), and n-BuLi (0.17 mL, 1.6 M solution in hexane, 0.27 mmol) was added dropwise at room temperature. Stirring was performed for 1 hour, and then HfCl₄(0.0814 g, 0.254 mmol) was added as a solid. The reaction mixture was heated at 100 °C, and stirred for 2 hours. After cooling was performed, MeMgBr (0.29 mL, 3.1 M solution in diethyl ether, 0.89 mmol) was added thereto, and stirred at room temperature overnight. After a volatile material was removed with a vacuum line, the product was extracted with toluene (1.5 g). The extract was obtained through cellite filtration. After the solvent was removed through a vacuum line, the residue was softened in hexane (2 mL) to obtain a yellow solid (0.128 g, 63%).

¹H NMR (C₆D₆) : δ 8.58(d, J = 7.8 Hz, 1H), 8.29(d, J = 8.4 Hz, 1H), 7.79(d, *J* = 7.8 Hz, 1H), 7.71(d, *J* = 7.2 Hz, 1H), 7.54(d, *J =* 7.8 Hz, 1H), 7.46 (m, 1H), 7.30(m, 2H), 7.15(m, 3H), 7.09(m, 3H), 6.88(t, *J* = 7.8 Hz, 1H), 6.62(d, *J* = 8.4 Hz, 1H), 6.48(s, 1H, NCH), 3.39(m, 1H), 2.92(m, 2H), 2.15(d, *J* = 13.8 Hz, 1H), 2.10(d, *J* = 13.8 Hz, 2H), 1.80(m, 2H), 1.65(m, 3H), 1.29(m, 6H), 1.17(d, *J* = 7.2 Hz, 3H, CH₃), 1.07(m, 3H), 0.99(s, 3H, HfCH₃), 0.95 (m, 2H), 0.73(d, *J*= 7.2 Hz, 3H, CH₃), 0.70(s, 3H, HfCH₃), 0.23(m, 1H) ppm.

¹³C NMR (C₆D₆) : δ 23.31, 25.04, 26.63, 26.74, 27.70, 27.76, 27.81, 28.29, 28.89, 35.00, 35.66, 36.62, 37.02, 38.13, 40.88, 62.53, 67.00, 77.27, 119.30, 120.30, 124.29, 125.52, 125.60, 125.97, 126.95, 127.06, 127.73, 129.91, 130.00, 130.09, 130.85, 134.36, 135.80, 140.73, 140.89, 144.02, 145.12, 146.31, 146.38, 146.49, 164.46, 170.79, 206.40 ppm.

Anal. calcd. (C₄₅H₅₂HfN₂): C, 67.61; H, 6.56; N, 3.50%. Found: C, 67.98; H, 6.88; N, 3.19%.

### (2) Preparation of organozinc compound

15.0 g (98.3 mmol) of 4-vinylbenzyl chloride and 2.628 g (108.1 mmol) of a magnesium metal were added to 78 ml of diethyl ether and stirred at 0 °C for 1.0 hour, and then filtered on cellite to remove magnesium added in excess. 19.2 g (81.9 mmol) of p-tosyl-OCH₂CH₂Cl dissolved in 27 ml of diethyl ether was added dropwise to the prepared 4-vinylbenzyl-magnesium chloride (4-vinylbenzyl-MgCl) Grignard reagent. Stirring was performed overnight, and then filtration on cellite was performed to remove magnesium chloride tosylate (MgCl (OTs)), which is an insoluble salt. The filtered filter cake was washed three times with 70 ml of hexane, and the solvent was removed with a rotary evaporator to obtain 14.2 g of a crude product. 43 mg (3,000 ppm) of t-butylcatechol was added as a radical remover, and under full vacuum, vacuum distillation was performed at 85 °C to obtain a compound represented by Formula 8-4-1 below. As a result of measuring the weight of the obtained compound, the yield was obtained at 81 wt%, and ¹H NMR and ¹³C NMR spectra were measured.

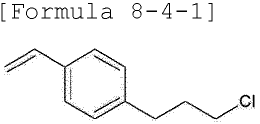

¹H NMR (C₆D₆) : δ 7.20 (d, J = 8.4 Hz, 2H), 6.88 (d, J = 8.4 Hz, 2H), 6.61 (dd, J = 16, 9.6 Hz, 1H, =CH), 5.63 (d, J = 16 Hz, 1H, =CH₂), 5.09 (d, J = 9.6 Hz, 1H, =CH₂), 3.04 (t, J = 6.6 Hz, 2H, CH₂), 2.42 (t, J = 6.6 Hz, 2H, CH₂), 1.64 (quintet, J = 6.6 Hz, 2H, CH₂Cl) ppm.

¹³C NMR (C₆D₆): δ 32.61, 34.12, 44.07, 113.13, 126.74, 128.97, 135.99, 137.11, 140.63 ppm.

Thereafter, 10.0 g (55.3 mmol) of the prepared compound (4-(3-chloropropyl)styrene) represented by Formula 8-4-1 above was dissolved in a mixed solvent of 20 ml of toluene and 7.98 g (111 mmol) of tetrahydrofuran (THF), and was added dropwise at room temperature to a suspension in which 2.02 g (83.0 mmol) of magnesium powder was stirred in 40 mL of toluene. After stirring was performed for 5.0 hours, a slight heat was gradually generated, and then the reaction mixture was filtered on celite to remove magnesium added in excess. 6.94 g (55.3 mmol, 1 equivalent to Grignard reagent) of ethyl zinc methoxide produced by reacting 6.83 g (55.3 mmol) of diethyl zinc (Et₂Zn) and 1.78 g (55.3 mmol) of methanol in-situ in 30 ml of toluene at room temperature for 1.0 hour was added to the filtrate. Thereafter, 60 ml of toluene was added thereto, followed by stirring at room temperature for 1.0 hour, and then the solvent was removed using a high vacuum line. Thereafter, 96 g of hexane was added thereto, and magnesium chloride methoxide (MgCl(OMe)), which is an insoluble salt, was removed on cellite. The filtrate was stored at -30 °C to deposit a compound represented by Formula 5-4 as a white crystalline solid. As a result of measuring the weight, the yield was obtained at 56 wt% (7.28 g), and ¹H NMR and ¹³C NMR were measured.

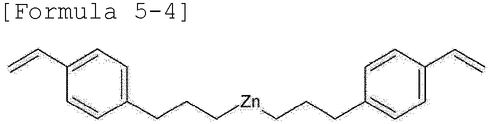

¹H NMR (C₆D₆) : δ 7.24 (d, J = 7.8 Hz, 2H), 6.90 (d, J = 7.8 Hz, 2H), 6.64 (dd, J = 17, 11 Hz, 1H, =CH), 5.66 (d, J = 17 Hz, 1H, =CH₂), 5.11 (d, J = 11 Hz, 1H, =CH₂), 2.43 (t, J = 7.2 Hz, 2H, CH₂), 1.80 (quintet, J = 7.2 Hz, 2H, CH₂), -0.19 (t, J = 7.2 Hz, 2H, CH₂Zn) ppm.

¹³C NMR(C₆D₆): δ 12.66, 28.82, 40.09, 113.15, 127.31, 129.23, 136.05, 137.10, 142.91 ppm.

### (3) Preparation of anionic polymerization initiator

(Trimethylsilyl)methyllithium (3,100 µmol, 291.9 mg) and N,N,N',N",N"-pentamethyldiethylenetriamine (3,100 µmol, 537.2 mg) were mixed with methylcyclohexane (20.7 g) and stirred for 30 min at room temperature to prepare an anionic polymerization initiator.

### Preparation Examples

### Preparation Example 1

A Parr reactor (3.785 L) was vacuum dried at 120 °C for 2 hours. MMAO (600 mg, 1,000 µmol-Al) as a scavenger in methylcyclohexane (1,200 g) was introduced into the reactor, and then the mixture was stirred at 120 °C for 1 hour using a heating jacket, and thereafter, the solution was removed using a cannula.

The reactor was filled with methylcyclohexane (1,200 g) containing MMAO (1,000 µmol-Al) as a scavenger and trioctylaluminum (500 µmol) as an additive, and filled with 1-hexene (560 g) as an alpha-olefin monomer, and then the temperature was set to 90 °C. A solution of the organic zinc compound (3,100 µmol) as a chain transfer agent in methylcyclohexane (5 g) was filled in the reactor, and then a methylcyclohexane solution containing the transition metal compound (10 µmol-Hf) activated with [(C₁₈H₃₇)₂N(H)Me]⁺[B(C₆F₅)₄]⁻ (1.0 eq) in methylcyclohexane was injected thereto. Polymerization was performed within the range of 90 °C to 120 °C for 40 minutes while maintaining the pressure in the reactor at 25 bar by opening a valve of an ethylene tank. After the polymerization, ethylene gas was discharged and then the temperature of the reactor was adjusted to back to 90 °C.

When the temperature reached 90 °C, the above-prepared anionic polymerization initiator (3,100 µmol) was added. The temperature was maintained at 90 °C for 30 minutes during stirring, and then styrene (56 g) was injected. The temperature was adjusted in the range of 90 °C to 100 °C using a heating jacket. The viscosity increased gradually and reached nearly non-visible conditions within 5 hours. An aliquot was taken for analysis by ¹H NMR spectroscopy. From the ¹H NMR analysis of the aliquot, complete conversion of styrene was confirmed. After the complete conversion of styrene, 2-ethylhexanoic acid and ethanol were continuously injected. An obtained polymer mass dried in an 80 °C vacuum oven overnight to obtain a block copolymer.

### Preparation Examples 2 to 4 and Comparative Preparation Examples 1 to 3

A block copolymer was obtained in the same manner as in Preparation Example 1, except that in Example 1, the types and contents of the transition metal compound, the scavenger, the organic zinc compound, the alpha-olefin monomer, the styrene, the polymerization initiator, and the additive were changed as described in Table 1 below.

However, in the case of Comparative Preparation Example 3, diethylzinc was used instead of the organic zinc compound prepared above as an organic zinc compound.

**[Table 1]**

| Classification | | Preparation Examples | | | | Comparative Preparation Examples | | |
|---|---|---|---|---|---|---|---|---|
| | | 1 | 2 | 3 | 4 | 1 | 2 | 3 |
| Transition metal compound | (µmol) | 10 | 15 | 13.5 | 9.5 | 10 | 6 | 12 |
| Scavenger | Type | MMAO | MMAO | MMAO | MMAO | MMAO | MMAO | MMAO |
| | (µmol) | 1,000 | 1,000 | 1,000 | 1,000 | 1,000 | 1,000 | 1,000 |
| Additive | (µmol) | 500 | 600 | 600 | 300 | - | - | - |
| Organic zinc compound | (µmol) | 3,100 | 3,100 | 3,100 | 3,100 | 4,200 | 2,100 | 3, 100 (E t₂Zn) |
| Alpha-olefin monomer | Type | 1-hexene | 1-octene | 1-octene | 1-octene | 1-hexene | 1-hexene | 1-hexene |
| | (g) | 560 | 760 | 760 | 760 | 880 | 580 | 560 |
| Anionic polymerization initiator | (µmol) | 3,100 | 3,200 | 3,200 | 2,300 | 3,500 | 2,000 | 2,500 |
| Styrene | (g) | 56 | 61.6 | 85 | 88 | 51.7 | 40 | 100 |

### Examples and Comparative Examples

### Example 1

To 50 parts by weight of the block copolymer prepared in Preparation Example 1 above, 50 parts by weight of polypropylene (SFC-750D manufactured by Lotte Chemical Co.) having a melt index (230 °C, 2.16 kg) of 7.0 g/10 min was added, and the mixture is compounded using a twin screw extruder to prepare a resin composition compound. At this time, the temperature was 180 °C to 200 °C and the screw rotation speed was 100 rpm.

### Example 2

To 30 parts by weight of the block copolymer prepared in Preparation Example 1 above, 70 parts by weight of polypropylene (SFC-750D manufactured by Lotte Chemical Co.) having a melt index (230 °C, 2.16 kg) of 7.0 g/10 min was added, and the mixture is compounded using a twin screw extruder to prepare a resin composition compound. At this time, the temperature was 180 °C to 200 °C and the screw rotation speed was 100 rpm.

### Example 3

To 50 parts by weight of the block copolymer prepared in Preparation Example 2 above, 50 parts by weight of polypropylene (SFC-750D manufactured by Lotte Chemical Co.) having a melt index (230 °C, 2.16 kg) of 7.0 g/10 min was added, and the mixture is compounded using a twin screw extruder to prepare a resin composition compound. At this time, the temperature was 180 °C to 200 °C and the screw rotation speed was 100 rpm.

### Example 4

To 50 parts by weight of the block copolymer prepared in Preparation Example 3 above, 50 parts by weight of polypropylene (SFC-750D manufactured by Lotte Chemical Co.) having a melt index (230 °C, 2.16 kg) of 7.0 g/10 min was added, and the mixture is compounded using a twin screw extruder to prepare a resin composition compound. At this time, the temperature was 180 °C to 200 °C and the screw rotation speed was 100 rpm.

### Example 5

To 50 parts by weight of the block copolymer prepared in Preparation Example 4 above, 50 parts by weight of polypropylene (SFC-750D manufactured by Lotte Chemical Co.) having a melt index (230 °C, 2.16 kg) of 7.0 g/10 min was added, and the mixture is compounded using a twin screw extruder to prepare a resin composition compound. At this time, the temperature was 180 °C to 200 °C and the screw rotation speed was 100 rpm.

### Comparative Example 1

A resin composition compound was prepared in the same manner as in Example 1, except that, in Example 1, when preparing a resin composition, G1645 manufactured by Kraton Co., which is a commercially available styrene-ethylene-butylene-styrene block copolymer (SEBS), was used instead of the block copolymer prepared in Preparation Example 1.

### Comparative Example 2

A resin composition compound was prepared in the same manner as in Example 1, except that, in Example 2, when preparing a resin composition, G1645 manufactured by Kraton Co., which is a commercially available styrene-ethylene-butylene-styrene block copolymer (SEBS), was used instead of the block copolymer prepared in Preparation Example 1.

### Comparative Example 3

To 50 parts by weight of the block copolymer prepared in Comparative Preparation Example 1 above, 50 parts by weight of polypropylene (SFC-750D manufactured by Lotte Chemical Co.) having a melt index (230 °C, 2.16 kg) of 7.0 g/10 min was added, and the mixture is compounded using a twin screw extruder to prepare a resin composition compound. At this time, the temperature was 180 °C to 200 °C and the screw rotation speed was 100 rpm.

### Comparative Example 4

To 50 parts by weight of the block copolymer prepared in Comparative Preparation Example 2 above, 50 parts by weight of polypropylene (SFC-750D manufactured by Lotte Chemical Co.) having a melt index (230 °C, 2.16 kg) of 7.0 g/10 min was added, and the mixture is compounded using a twin screw extruder to prepare a resin composition compound. At this time, the temperature was 180 °C to 200 °C and the screw rotation speed was 100 rpm.

### Comparative Example 5

To 50 parts by weight of the block copolymer prepared in Comparative Preparation Example 3 above, 50 parts by weight of polypropylene (SFC-750D manufactured by Lotte Chemical Co.) having a melt index (230 °C, 2.16 kg) of 7.0 g/10 min was added, and the mixture is compounded using a twin screw extruder to prepare a resin composition compound. At this time, the temperature was 180 °C to 200 °C and the screw rotation speed was 100 rpm.

### Experimental Examples

For the resin compositions prepared in Examples 1 to 5 and Comparative Examples 1 to 5, the shape of the domain region, the size of the domain region, and the distance between the plurality of domain regions were measured in the following manner, and are shown in Table 2 below.

In addition, the resin compositions prepared in Examples 1 to 5 and Comparative Examples 1 to 3 were used to prepare specimens in the following manner, and the impact strength was measured, which is shown in Table 2 below.
* Small angle X-ray scattering (SAXS) analysis: The analysis was performed using an Xeuss 2.0 SAXS/WAXS instrument manufactured by Xenocs Co. Specifically, a sample in a specimen form was attached to a sample holder, and the corresponding sample was measured in a 2.5 m SDD for 10,800 seconds, and an air scattering intensity measured during the same time was used as a background. An 2D MIDI image obtained from the experiment was circularly averaged on a beam stop basis and converted to a 1D image. Using this, each phase of a major phase and a minor phase were assumed and modeled to obtain the shape of the domain region, the size of the domain region, and the distance between the domain regions.
* Low-temperature impact strength (kgf·m/m): Each of the resin compositions prepared in Examples and Comparative Examples was injected into a mold at 210 °C for 10 seconds at a pressure of 6 bar, and molded into a notched type with a size of 63.5 mm × 10.16 mm × 3.2 mm in accordance with ASTM D256. At this time, the notch length of the prepared specimen was 5 mm. From the prepared specimen, in accordance with ASTM D256, Charpy impact strength at a low temperature (-50 °C) was measured by applying two of Pendulum 2025 by using a Model IT 504 impact tester manufactured by Tinius Olsen Co. The low-temperature (-50 °C) impact strength was measured by putting the prepared specimen into a low-temperature chamber set to - 50 °C, and exposing the specimen at -50 °C for 12 hours or more, followed by measuring the impact strength within 3 seconds after taking the specimen out of the low-temperature chamber.

**[Table 2]**

| Classification | Shape of domain region | Size of domain region (nm) | Distance between plurality of domain regions (nm) | Low-temperature impact strength (kgf·m/m) |
|---|---|---|---|---|
| Example 1 | Sphere | 11.7 | 36.1 | 14.6 |
| Example 2 | Sphere | 12.3 | 35.5 | 7.0 |
| Example 3 | Sphere | 12.0 | 36.8 | 16.1 |
| Example 4 | Sphere | 14.5 | 41.3 | 19.5 |
| Example 5 | Sphere | 10.1 | 32.8 | 19.2 |
| Comparative Example 1 | Cylinder | 7.9 | 30.1 | 2.0 |
| Comparative Example 2 | Cylinder | 8.0 | 30.7 | 1.6 |
| Comparative Example 3 | Sphere | 9.0 | 29.5 | 10.3 |
| Comparative Example 4 | Sphere | 10.2 | 19.7 | 8.6 |
| Comparative Example 5 | Sphere | 14.7 | 63.6 | 2.5 |

As shown in Table 2, the resin compositions of Examples 1 to 5 prepared by using the block copolymers prepared in Preparation Examples 1 to 4 of the present invention have been confirmed to have excellent low-temperature impact strength since the shape of the domain region is spherical and the size of the domain region and the distance between the plurality of domain regions are satisfied, from which it can be predicted that the resin compositions also have excellent room-temperature impact strength.

On the other hand, the resin compositions of Comparative Examples 1 and 2 prepared by using G1645 manufactured by Kraton Co., which is a commercially available styrene-ethylene-butylene-styrene block copolymer (SEBS), instead of using the block copolymer prepared in Preparation Examples 1 to 4 of the present invention, have been confirmed to have a cylindrical domain region shape, a small domain region size, and a narrow distance between the plurality of domain regions. As a result, Comparative Example 1, which comprises the styrene-ethylene-butylene-styrene block copolymer (SEBS) in the resin composition with the same content as that of the block copolymer prepared in Preparation Examples 1 to 4 as in the resin compositions prepared in Examples 1, and 3 to 5 of the present invention, has been confirmed to have extremely poor low-temperature impact strength. As a result, Comparative Example 2, which comprises the styrene-ethylene-butylene-styrene block copolymer (SEBS) in the resin composition with the same content as that of the block copolymer prepared in Preparation Example 1 as in the resin compositions prepared in Example 2 of the present invention, has also been confirmed to have extremely poor low-temperature impact strength.

In addition, from Examples 1, and 3 to 5, and Comparative Example 3, it has been confirmed that even if the shape of the domain region is spherical, and the distance between the plurality of domain regions is controlled, if the size of the domain region is not large enough, the low-temperature impact strength is degraded even if the block copolymer is comprised in the same content.

In addition, from Examples 1, and 3 to 5, and Comparative Example 4, it has been confirmed that even if the shape of the domain region is spherical, and the size of the domain region is controlled, if the distance between the plurality of domain regions is narrower than the range limited by the present invention, the low-temperature impact strength is degraded even if the block copolymer is comprised in the same content.

In addition, from Examples 1, and 3 to 5, and Comparative Example 5, it has been confirmed that even if the shape of the domain region is spherical, and the size of the domain region is controlled, if the distance between the plurality of domain regions is wider than the range limited by the present invention, the low-temperature impact strength is degraded even if the block copolymer is comprised in the same content.

From these results, it has been confirmed that the resin composition, in which the dispersibility of the block copolymer is controlled by controlling the size of the domain region and the distance between the plurality of domain regions, has excellent room-temperature and low-temperature impact strength, and accordingly, the resin composition of the present invention has been confirmed to have excellent room-temperature and low-temperature impact resistance.

## Claims

1. A resin composition comprising:
a matrix region; and a plurality of domain regions dispersed in the matrix region,
wherein the matrix region comprises a polyolefin-based resin;
the domain region comprises a block copolymer comprising an aromatic vinyl-based polymer block and an olefin-based polymer block;
a size of the domain region is 10 nm to 15 nm; and
a distance between the plurality of domain regions is 20 nm to 60 nm.

2. The resin composition of claim 1, wherein the domain region has a shape of a sphere or an ellipsoid.

3. The resin composition of claim 1, wherein the polyolefin-based resin is polypropylene.

4. The resin composition of claim 1, wherein the olefin-based polymer block comprises an ethylene monomer unit and an alpha-olefin-based monomer unit.

5. The resin composition of claim 1, wherein the olefin-based polymer block comprises an ethylene monomer unit and a C3 to C20 alpha-olefin-based monomer unit.

6. The resin composition of claim 4, wherein the alpha-olefin-based monomer is one or more selected from a group consisting of 1-propene, 1-butene, 1-pentene, 3-methyl-1-butene, 1-hexene, 4-methyl-1-pentene, 3-methyl-1-pentene, 1-heptene, 1-octene, 1-decene, 1-undecene, 1-dodecene, 1-tetradecene, 1-hexadecene, 1-eicocene, 4,4-dimethyl-1-pentene, 4,4-diethyl-1-hexene, and 3,4-dimethyl-1-hexene.

7. The resin composition of claim 1, wherein the resin composition comprises the polyolefin-based resin in an amount of 40 wt% to 80 wt% and the block copolymer in an amount of 20 wt% to 60 wt%.

8. A method for preparing a resin composition, the method comprising,
S10: in the presence of a chain transfer agent, polymerizing one or more olefin-based monomers by using a catalyst composition comprising a transition metal catalyst to prepare an olefin-based polymer block intermediate;
S20: in the presence of the olefin-based polymer block intermediate prepared in the step S10, introducing a polymerization initiator and an aromatic vinyl-based monomer and performing a polymerization to prepare a block copolymer; and
S30: blending the block copolymer prepared in the step S20 and a polyolefin-based resin.

9. The method of claim 8, wherein the catalyst composition comprises an aluminoxane-based compound and trialkylaluminum.

10. The method of claim 9, wherein the trialkylaluminum is trioctylaluminum.

11. The method of claim 9, wherein the catalyst composition comprises the aluminoxane-based compound and the trialkylaluminum at a molar ratio of 1:0.01 to 1:10.0.
